(19) **Europäisches Patentamt**

**European Patent Office**

**Office européen des brevets**

(11) **EP 1 142 625 B1**

(12) **EUROPEAN PATENT SPECIFICATION**

(45) Date of publication and mention of the grant of the patent:
**28.01.2004 Bulletin 2004/05**

(51) Int Cl.$^7$: **B01D 53/46**, B01D 53/50

(21) Application number: **01111676.1**

(22) Date of filing: **15.03.1996**

(54) **Combustion exhaust gas treatment apparatus and method**

Vorrichtung und Verfahren zur Behandlung von Abgasen aus Verbrennungsanlagen

Dispositif et procédé pour le traitement des gaz de combustion

(84) Designated Contracting States:
**DE DK ES GB IT**

(30) Priority: **29.08.1995 JP 21997095**
**30.03.1995 JP 7277895**
**30.03.1995 JP 7277995**
**07.04.1995 JP 8246095**

(43) Date of publication of application:
**10.10.2001 Bulletin 2001/41**

(62) Document number(s) of the earlier application(s) in accordance with Art. 76 EPC:
**96104165.4 / 0 734 754**

(73) Proprietor: **MITSUBISHI JUKOGYO KABUSHIKI KAISHA**
**Tokyo (JP)**

(72) Inventors:
• **Shimizu, Taku**
**Chiyoda-ku, Tokyo (JP)**
• **Kimura, Kazuaki**
**Chiyoda-ku, Tokyo (JP)**
• **Okazoe, Kiyoshi**
**Chiyoda-ku, Tokyo (JP)**
• **Tatani, Atsushi**
**Chiyoda-ku, Tokyo (JP)**
• **Ukawa, Naohiko,**
**Nishi-ku Hiroshima-shi, Hiroshima-ken (JP)**
• **Hino, Masao,**
**Nishi-ku Hiroshima-shi, Hiroshima-ken (JP)**
• **Okino, Susumu,**
**Nishi-ku Hiroshima-shi, Hiroshima-ken (JP)**
• **Haruki, Takashi,**
**Nishi-ku Hiroshima-shi, Hiroshima-ken (JP)**
• **Takashina, Toru,**
**Nishi-ku Hiroshima-shi, Hiroshima-ken (JP)**

(74) Representative: **Behrens, Dieter, Dr.-Ing.**
**Wuesthoff & Wuesthoff**
**Patent- und Rechtsanwälte**
**Schweigerstrasse 2**
**81541 München (DE)**

(56) References cited:
**EP-A- 0 304 412**          **WO-A-89/08493**
**GB-A- 1 382 232**

## EP 1 142 625 B1

**Description**

FIELD OF THE INVENTION AND RELATED ARTS

The present invention relates to a combustion exhaust gas treatment apparatus and more particularly to a combustion exhaust gas treatment apparatus capable of easily removing selenium (Se) from combustion exhaust gas containing sulfurous acid, dust and Se components, and making harmless the Se components.

Hitherto, a combustion exhaust gas treatment apparatus installed in a thermal power plant or the like, comprises a dust collector (usually an electrostatic precipitator) for removing fly ash and other dust from the combustion exhaust gas, and combustion exhaust gas desulfurization apparatus for absorbing sulfurous acid in the combustion exhaust gas is generally employed.

Moreover, conventionally, as the combustion exhaust gas treatment apparatus installed in a thermal power plant or the like, a combustion exhaust gas treatment apparatus is generally employed which comprises a dry dust collector (usually an electrostatic precipitator) for removing fly ash and other dust from the combustion exhaust gas, and a wet combustion exhaust gas desulfurization apparatus for absorbing sulfurous gas in the combustion exhaust gas by contacting it with an absorbent slurry (for example, slurry containing calcium compound) in an absorption column and separating and recovering gypsum as byproduct from the slurry in the absorption column.

Recently, handling of harmful impurities contained in the combustion exhaust gas aside from sulfur oxides is posing a problem. In particular, in the combustion exhaust gas treatment apparatus for coal fired boilers, the harmfulness of selenium (Se) contained at a maximum level of about 10 mg/kg in coal is a problem lately, and its harmless treatment is demanded.

Meanwhile, Se exists as tetravalent Se (main form: selenious acid $SeO_3{}^{2-}$) which is easy to treat by making it insoluble by a treating agent, and hexavalent Se (main form: selenic acid $SeO_4{}^{2-}$) which is hard to treat by making it insoluble, and in particular the hexavalent Se is high in solubility (solubility at 20°C is 95 %) and is easy to elute. Besides, this Se has a toxicity similar to that of arsenic compound, and disaster cases and emission regulations are known overseas, and it is newly added to the list of regulated items also in Japan, and is controlled by the environmental standard (0.01 mg/liter), discharge standard (0.1 mg/liter), and elution standard in landfill (0.3 mg/liter).

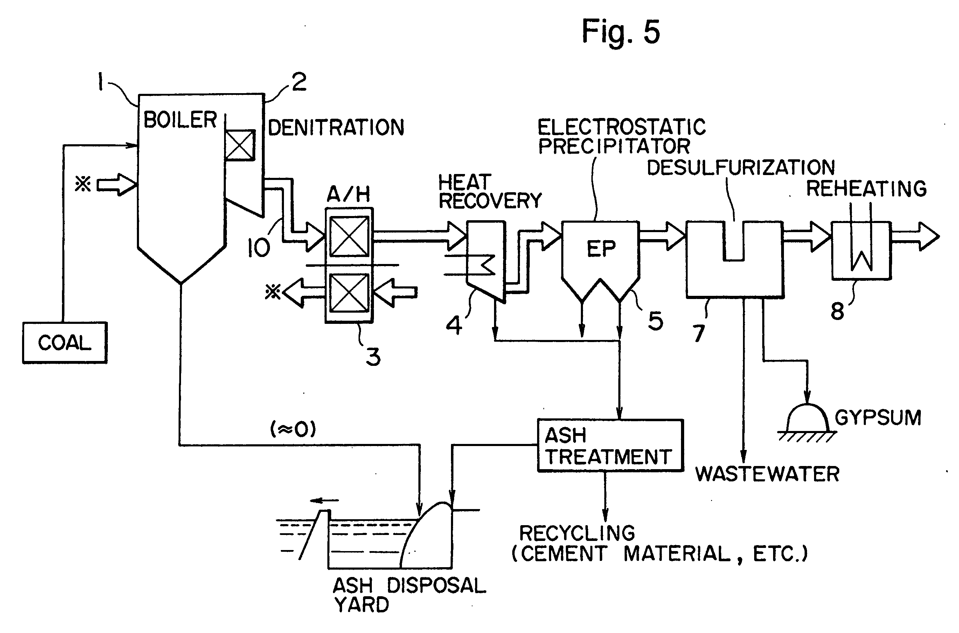

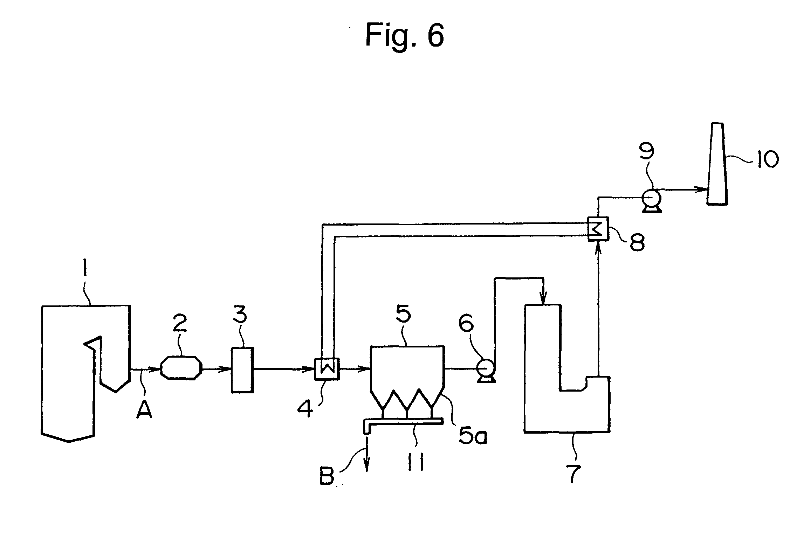

Fig. 5 shows an example of prior art of combustion exhaust gas treatment apparatus of this type (an example of combustion exhaust gas treatment apparatus for coal fired boiler). In Fig. 5 and Fig. 6, the combustion exhaust gas A emitted from a coal fired boiler 1 is sent into a denitration apparatus 2 installed downstream of the boiler 1 to be rid of nitrogen oxides (NOx), and passes through an air heater 3 and a heat recovery unit 4 of gas-gas heater (GGH), and is introduced into an electrostatic precipitator (EP) 5, in which fly ash and dust are removed. In succession, the combustion exhaust gas is guided into a wet combustion exhaust gas desulfurization apparatus 7 by a fan 6, and sulfurous gas is removed in this desulfurization apparatus 7, and after passing through a reheater 8 of the gas-gas heater (GGH), it is led into a stack 10 by a fan 9, and is released into the atmosphere through the stack 10 (Fig. 6).

On the other hand, fly ash and dust removed in the electrostatic precipitator 5 are discharged from plural hoppers 5a (dust recovery units) formed in the electrostatic precipitator 5, and are conveyed and collected in batch by a conveyor 11. Thus collected dust B is either recycled as cement material or the like, or discarded in an ash disposal yard (Fig. 5).

Herein, the desulfurization apparatus 7 comprises an absorption column, for example, in which combustion exhaust gas is introduced, and by contact of combustion exhaust gas with absorbent slurry (usually slurry containing calcium compound) in this absorption column, the sulfurous acid in the combustion exhaust gas is. absorbed in wet process, and usually from the slurry in the absorption column, gypsum is separated and collected as byproduct.

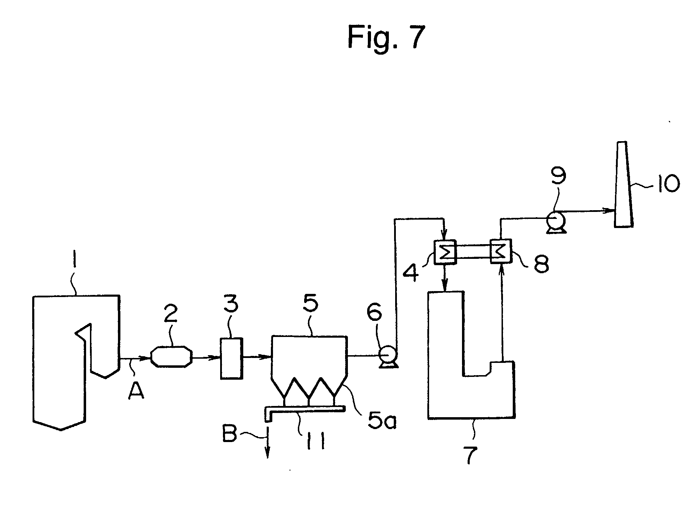

Incidentally, the heat recovery unit 4 of the gas-gas heater (GGH) may be also disposed immediately before the desulfurization apparatus 7 as shown in Fig. 7.

In these combustion exhaust gas treatment apparatuss, most of Se in coal (Se in combustion exhaust gas) is condensed at the downstream side of the air heater 3 (that is, the position before introduction into the electrostatic precipitator 5), and is removed by the electrostatic precipitator 5 in a state being contained in the dust in combustion exhaust gas, and is directly mixed in the refuse in the ash disposal yard or in the cement material. To render Se harmless by conforming to the elution standard, it requires a complicated and costly aftertreatment of, for example, diluting the ash removed by the electrostatic precipitator 5 in a huge volume of water.

British Patent 1,382,232 describes a process for the recovery of selenium from waste combustion gas, particularly the waste gas from a glass melting furnace. Waste gases discharged from such furnaces contain a selenium component in the form of elemental selenium or a compound such as selenium dioxide. The selenium component is toxic and must be separated out and recovered in order to prevent atmospheric pollution. In order to achieve this separation a process is proposed which comprises a first step of contacting the waste gas having been cooled to about 250 - 300°C, with an aqueous absorption solution comprising an alkali metal sulfite and/or an alkali metal bisulfite in an absorption tower so that at least a part of the selenium component is absorbed and the humidity of the gas is

2

increased. The process further comprises a second step of passing the waste gas treated in the first step through a glas fiber filter (demister) kept in a moist condition to collect at least some of the remaining elemental selenium and selenium compound on the filter, and in a third step acid, alpha acid $H_2SO_4$, is added to the absorption solution discharged from the first and second steps so as to reduce the selenium component dissolved in the absorption solution to elemental selenium which is precipitated from the solution and the elemental selenium so precipitated is recovered.

A method for separating mercury and selenium from roasting gases from roasting zinc concentrates is described in Erzmetall, 30(1977)12, pp 555-604. The method for separating mercury and selenium from exhaust gas includes introducing the exhaust gas from the roasting furnace for Zn-concentrate to a boiler, cooling and then separating the dust treated with an electric dust collector. For separating selenium calcium carbonate, $CaCO_3$, is added into the rinsed precipitate and then mercury is separated and subsequently water, $H_2SO_4$ and $SO_2$ are added. Such exhaust gas from the roasting furnace is different from combustion gas, especially of a thermal power plant.

OBJECTS AND SUMMARY OF THE INVENTION

In the light of the prior art, it is an object of the invention to present a combustion exhaust gas treatment apparatus capable of more easily removing and making harmless the Se components contained in combustion exhaust gas to the extent necessary to meet generally adopted environmental standards for the purity of combustion exhaust gas, in particular of thermal power plants.

The invention achieving this object and its preferred embodiments are defined in the appended claims.

(1) A combustion exhaust gas treatment apparatus for treating combustion exhaust gas containing sulfurous acid, dust and Se components, comprising a desulfurization apparatus having an absorption column for circulating an absorbent slurry for absorbing and removing sulfurous acid in the combustion exhaust gas, a solid-liquid separator for the absorbent slurry extracted from the desulfurization apparatus, means for mixing a treating agent into a circulation liquid composing the absorbent slurry extracted from the desulfurization apparatus, for making at least tetravalent Se insoluble, and means for spraying the circulation liquid mixed with the treating agent into a combustion exhaust gas lead-in passage upstream of the desulfurization apparatus, wherein the combustion exhaust gas is directly fed into the desulfurization apparatus.

(2) A combustion exhaust gas treatment apparatus for treating combustion exhaust gas containing sulfurous acid, dust and Se components, comprising a dust collector for removing dust in the combustion exhaust gas, a desulfurization apparatus having an absorption column for circulating an absorbent slurry for absorbing and removing sulfurous acid, a solid-liquid separator for the absorbent slurry extracted from the desulfurization apparatus, means for mixing a treating agent into a circulation liquid composing the absorbent slurry extracted from the desulfurization apparatus, for making at least tetravalent Se insoluble, and means for spraying the circulation liquid mixed with the treating agent into a combustion exhaust gas lead-in passage upstream of the dust collector.

(3) A combustion exhaust gas treatment apparatus for treating combustion exhaust gas containing sulfurous acid, dust and Se components, comprising a desulfurization apparatus having an absorption column for circulating an absorbent slurry for absorbing and removing sulfurous acid in the combustion exhaust gas, with a cooling and dust collecting column disposed upstream of the absorption column, means for separating the circulation slurry extracted from the cooling and dust collecting column into solid and liquid, means for mixing a treating agent for making at least tetravalent Se insoluble, to the separated liquid discharged from the separating means, and means for spraying the separated liquid mixed with the treating agent by the mixing agent, into a combustion exhaust gas lead-in passage upstream of the desulfurization apparatus, wherein the combustion exhaust gas is directly fed into the cooling and dust collecting column of the desulfurization apparatus.

(4) The combustion exhaust gas treatment apparatus of (1), further comprising oxidation-reduction reaction control means for controlling the oxidation-reduction reaction in the desulfurization apparatus so that the hexavalent Se mixed in the slurry in the desulfurization apparatus may be reduced by the sulfurous acid in the slurry to become tetravalent.

In the combustion exhaust gas treatment apparatus of (1), most of Se in combustion exhaust gas is removed by the dust collector in a state being contained in the dust, but at least tetravalent Se thereof is, before being removed by the dust collector, made insoluble by reacting with the treating agent for making at least tetravalent Se insoluble (hereinafter merely called treating agent) mixed in the circulation liquid of the desulfurization apparatus sprayed into the combustion exhaust gas lead-in passage by the spraying means. Accordingly, when the other Se content than tetravalent Se is less, the Se elution standard may be satisfied if the dust after treatment may be directly recycled or discarded.

If hexavalent and other Se or other impurities mix into the slurry in the desulfurization apparatus, most of hexavalent Se reacts with sulfurous acid absorbed from the combustion exhaust gas in the slurry in the desulfurization apparatus, and is reduced to change to tetravalent Se, and mainly tetravalent Se exists in the circulation liquid in the desulfurization apparatus. Consequently, this Se and other impurities are led into the mixing means as the circulation liquid is extracted, and mixed with the treating agent, and sprayed into the combustion exhaust gas lead-in passage, and most Se is removed by the dust collector, together with dust, in an insoluble state. If Se and other impurities are slightly mixed into the desulfurization apparatus without being removed by the dust collector, the Se and other impurities are prevented from being accumulated excessively in the circulation liquid of the desulfurization apparatus by the functions of the mixing means and spraying means, so that the wastewater treating apparatus for treating the wastewater of the desulfurization apparatus is not needed.

Moreover, by using the desulfurization apparatus having a cooling and dust collecting column upstream of the absorption column, fine dust particles not captured by the electrostatic precipitator can be captured in the cooling and dust collecting column, and hardly mix into the slurry of the absorption column, and therefore higher desulfurization performance is achieved, and the collected gypsum is higher in quality.

In the combustion exhaust gas treatment apparatus of (2), most Se in combustion exhaust gas is directly fed into the desulfurization apparatus, together with the combustion exhaust gas, in a state being contained in the dust, but at least tetravalent Se thereof is made insoluble by reacting with the treating agent mixed in the circulation liquid of the desulfurization apparatus sprayed into the combustion exhaust gas lead-in passage by the spraying means. Accordingly, at least tetravalent Se contained in the combustion exhaust gas is directly discharged as being mixed into the solid matter (gypsum, etc.) separated and formed from the slurry in the desulfurization apparatus.

If hexavalent Se mixed into the desulfurization apparatus, most of the hexavalent Se reacts with sulfurous acid absorbed in the slurry in the desulfurization apparatus, and is reduced to be tetravalent Se, and also finally reacts with the treating agent added by the mixing means to be insoluble, and is discharged as being mixed in the solid matter (dust cake, etc.) separated and formed in the desulfurization apparatus.

Therefore, in this apparatus, too, the Se elution standard ban be easily satisfied, and without requiring wastewater treating apparatus, the Se and others are prevented from being accumulated excessively in the absorption liquid in the desulfurization apparatus.

In the combustion exhaust gas treatment apparatus of (3), most Se in combustion exhaust gas is directly fed into the cooling and dust collecting column of the desulfurization apparatus, together with the combustion exhaust gas, in a state being contained in the dust, but at least tetravalent Se thereof is made insoluble by reacting with the treating agent mixed in the circulation liquid of the desulfurization apparatus sprayed into the combustion exhaust gas lead-in passage by the spraying means. Accordingly, at least tetravalent Se contained in the combustion exhaust gas is directly discharged as being mixed into the solid matter (gypsum, etc.) separated and formed by the separating means for separating the circulation slurry in the cooling and dust collecting column into solid and liquid.

If hexavalent Se mixed into the cooling and dust collecting column of the desulfurization apparatus, most of the hexavalent Se reacts with sulfurous acid absorbed in the liquid in the cooling and dust collecting column, and is reduced to be tetravalent Se, and also finally reacts with the treating agent added by the mixing means to be insoluble, and is discharged as being mixed in the solid matter separated and formed by the separating means.

Therefore, in this apparatus, too, the Se elution standard ban be easily satisfied. Moreover, without requiring wastewater treating apparatus, the Se and others are prevented from being accumulated excessively in the circulation liquid in the desulfurization apparatus. Still more, in this apparatus, since dust does not mix into the slurry in the absorption column of the desulfurization apparatus, the desulfurization rate in the desulfurization apparatus, the purity of gypsum, and other performances may be kept high.

In the combustion exhaust gas treatment apparatus of (4), the oxidation-reduction reaction control means controls the oxidation-reduction reaction of the slurry in the desulfurization apparatus so that the hexavalent Se mixed in the slurry in the desulfurization apparatus may be almost completely reduced by the sulfurous acid in the slurry to become tetravalent. Accordingly, if existing in the combustion exhaust gas, the hexavalent Se can be changed to tetravalent almost completely in the desulfurization apparatus, and the Se in combustion exhaust gas can be easily and completely treated. When the desulfurization apparatus comprises cooling and dust collecting column, most of hexavalent Se is removed in the cooling and dust collecting column, but where the cooling and dust collecting column is not provided, the installation of this oxidation-reduction reaction control means is particularly effective.

BRIEF DESCRIPTION OF THE DRAWINGS

Fig. 1 is a schematic structural diagram showing a constitution of a combustion exhaust gas treatment apparatus in embodiment 1 of the invention.
Fig. 2 is a schematic structural diagram showing a constitution of a combustion exhaust gas treatment apparatus in embodiment 2 of the invention.

Fig. 3 is a schematic structural diagram showing a constitution of a combustion exhaust gas treatment apparatus in embodiment 3 of the invention.

Fig. 4 is a schematic structural diagram showing a constitution of a combustion exhaust gas treatment apparatus in embodiment 4 of the invention.

Fig. 5 is a schematic structural diagram showing an example of a conventional combustion exhaust gas treatment apparatus.

Fig. 6 is a schematic structural diagram showing other example of a conventional combustion exhaust gas treatment apparatus.

Fig. 7 is a schematic structural diagram showing a different example of a conventional combustion exhaust gas treatment apparatus.

DETAILED DESCRIPTION OF THE PREFERRED EMBODIMENTS

Embodiments of the invention are described below by reference to the drawings.

(Embodiment 1)

Embodiment 1 of the invention (1) and (3) is described in the first place.

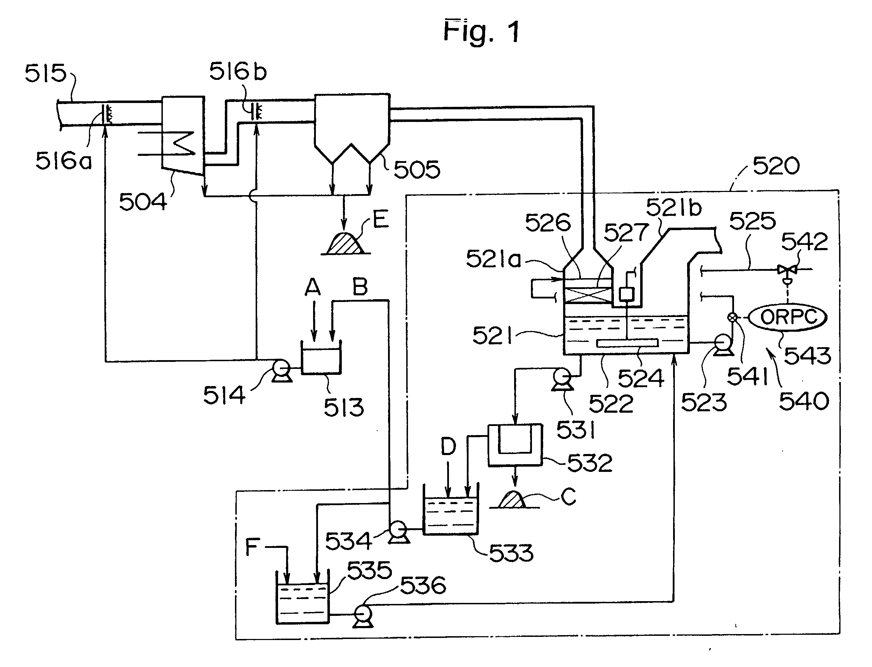

Fig. 1 is a schematic structural diagram showing a constitution of a combustion exhaust gas treatment apparatus in embodiment 1 of the invention. Constituent elements same as in the prior art are identified with same reference numerals, and their explanations are omitted. In the combustion exhaust gas treatment apparatus of this embodiment, as shown in Fig. 1, circulation liquid B (liquid discharged from a pump 534 described below) extracted from a wet combustion exhaust gas desulfurization apparatus 520 (hereinafter desulfurization apparatus 520) is mixed with treating agent A by mixing means 513, and the circulation liquid B mixed with the treating agent A is sprayed by a pump 514 from a spray pipe 516a or 516b provided in a combustion exhaust gas lead-in passage 515 upstream of an electrostatic precipitator 505, and the Se contained in the dust is made insoluble by the treating agent A, discharged as dust E, while the wastewater discharged from the desulfurization apparatus 520 is evaporated to eliminate the wastewater. Herein, the pump 514, spray pipe 516a or 516b, and the piping system for connecting them compose the spray means of the invention.

In this embodiment, since the electrostatic precipitator 505 is provided, as described below, most Se in combustion exhaust gas is removed as being contained in the dust, and very little Se mixes into the desulfurization apparatus 520, but in the desulfurization apparatus, as shown in reaction formulas (1) and (2), there are tetravalent Se (main form: selenious acid $SeO_3{}^{2-}$ and hexavalent Se (main form: selenic acid $SeO_4{}^{2-}$). In this constitution, the hexavalent Se is almost completely reduced by the so-called ORP control (oxidation-reduction potential control) in the desulfurization apparatus 520, and is transformed into tetravalent Se.

$$SeO_{2(g)} + H_2O \rightarrow 2H+ + SeO_3{}^{2-} \tag{1}$$

$$SeO_3{}^{2-} + 1/2O_2 \rightarrow SeO_4{}^{2-} \tag{2}$$

The mixing means 513 is composed of, for example, a mixing tank, and an agitating mechanism for agitating the liquid in the mixing tank. The circulation liquid B extracted from the desulfurization apparatus 520 and the treating agent A are charged and mixed, and extracted by the pump 514, and sent into the spray pipe 516a or 516b. Herein, as the treating agent, a chemical at least reacting with tetravalent Se (main form: selenious acid $SeO_3{}^{2-}$) to make it insoluble is needed, and for example, $FeCl_3$ or $Fe_2(SO_4)_3$ may be used.

The spray pipe 516a or 516b is composed of a pipe main body installed in the combustion exhaust gas lead-in passage (duct) 515 and connected to the pump 514, and a spray nozzle formed in the pipe main body. The location of the spray pipe 516a or 516b (the position for spraying the liquid) in Fig. 1 is in the upstream of a heat recovery unit 504 and in the upstream of the electrostatic precipitator 505, but it may be also installed in the upstream side of an air heater, not shown, installed in the upstream side of the combustion exhaust gas lead-in passage 515, as far as the sprayed liquid may splash in the combustion exhaust gas and be gasified by the heat of the combustion exhaust gas, and the treating agent A in the liquid may efficiently contact with the dust in the combustion exhaust gas.

The desulfurization apparatus 520 is of tank oxidation type, and comprises an absorption column 521 for feeding an absorbent slurry (composed of limestone in this example) into a bottom tank 522, a circulation pump 523 for sending the absorbent slurry in the tank 522 into an upper part 521a (combustion exhaust gas feed-in unit) of the absorption column 521 to contact with the combustion exhaust gas, a rotary arm type air sparger 524 supported in the tank 522 for rotation horizontally by means of a motor not shown, and agitating the slurry in the tank 522 and blowing in the supplied aid efficiently into the tank 522 as fine bubbles, and an air feed tube 525 for feeding air into this air sparger 524, and it is designed to obtain gypsum by totally oxidizing by efficient contact between air and the absorbent slurry absorbing sulfurous acid in the tank 522.

A slurry pump 531 for sucking out the slurry in the tank 522 is connected to the tank 522, and the slurry sucked out by this slurry pump 531 is supplied into a solid-liquid separator 532 to be separated into solid and liquid, and gypsum C in the slurry is taken out as solid cake (usually water content of about 10%). On the other hand, the separated liquid (mainly water) from the solid-liquid separator 532 are once sent into a separated liquid tank 533, and, as required, makeup water D is added, and part of such liquid is sent into an absorbent slurry tank 535 by a pump 534, and mixed with limestone F ($CaCO_3$) supplied from a limestone silo not shown to be formed into an absorbent slurry, which is supplied again into the tank 522 by a slurry pump 536.

The desulfurization apparatus 520 is further provided with, as a preferred embodiment of the invention, oxidation-reduction reaction control means 540 for controlling the oxidation-reduction reaction in the absorption column 521. This oxidation-reduction reaction control means 540 is composed of a sensor 541 disposed in the discharge side piping of the circulation pump 523 for detecting the oxidation-reduction potential of the slurry in the tank 522, a flow rate control valve 542 disposed in the midst of the air feed tube 525 for adjusting the air feed rate into the air sparger 524, and a controller 543 for controlling the action of the flow rate control valve 542 on the basis of the detection output of the sensor 541. Herein, the sensor 541 is composed by immersing an electrode, for example, made of platinum into slurry. The controller 543 is designed to control the opening degree of the flow rate control valve 542 continuously, so that the air feed rate into the air sparger 524 may be a minimum required limit for oxidizing and digesting the sulfurous acid dissolved in the slurry from the combustion exhaust gas. For example, more specifically, on the basis of the correlation of the concentration of sulfurous acid and oxidation-reduction potential, the oxidation-reduction potential when the concentration of sulfurous acid is nearly zero is predetermined as the reference potential, and, by proportional control, when the oxidation-reduction potential detected by the sensor 541 becomes lower than this reference potential, the air feed rate is increased according to the deviation, and when the oxidation-reduction potential detected by the sensor 541 becomes higher than this reference potential, the air feed rate is decreased according to the deviation.

Incidentally, since the oxidation-reduction reaction control means 540 is designed to feed a minimum required limit for oxidizing the total volume of sulfurous acid, it eventually has a function of inducing a nearly total reduction reaction of the other acids contained in the slurry by the sulfurous acid.

That is, the slight Se not removed by the electrostatic precipitator 505 is fed into the absorption column 521 together with combustion exhaust gas, and tetravalent Se (main form: selenious acid $SeO_3^{2-}$) and hexavalent Se (main form: selenic acid $SeO_4^{2-}$) exist, and the hexavalent Se is controlled by the controller 543, and reacts with the sulfurous acid absorbed from the combustion exhaust gas to undergo reduction reaction to be transformed into tetravalent Se (main form: selenious acid $SeO_3^{2-}$), which takes place in the absorption column 521. This reaction is expressed in the reaction formula (3).

$$SeO_4^{2-} + SO_3^{2-} \rightarrow SeO_3^{2-} + SO_4^{2-} \tag{3}$$

In thus constituted combustion exhaust gas treatment apparatus, in the upstream of the electrostatic precipitator 505, the combustion exhaust gas is sufficiently cooled, and most Se in the combustion exhaust gas is condensed and deposits on the fly ash and other dust (of smaller particle size in particular), and hence most of Se in the combustion exhaust gas is captured by the electrostatic precipitator 505 together with the dust. Moreover, at the upstream side of the electrostatic precipitator 505, the liquid containing treating agent A is sprayed from the spray pipe 516a or 516b, and reacts with Se depositing on the dust in the combustion exhaust gas. Accordingly, tetravalent Se (main form: selenious acid $SeO_3^{2-}$) almost completely reacts as shown in reaction formulas (4), (5), or (6), (7), and becomes iron selenite ($Fe_2(SeO_3)_3$) to be insoluble, and is mixed in the removed dust.

$$FeCl_3 \rightarrow Fe^{3+} + 3Cl^- \tag{4}$$

$$2Fe^{3+} + 3FeO_3^{2-} \rightarrow Fe_2(SeO_3)_3 \downarrow \tag{5}$$

or

$$Fe_2(SO_4)_3 \rightarrow 2Fe^{3+} + SO_4{}^{2-} \tag{6}$$

$$2Fe^{3+} + 3SeO_3{}^{2-} \rightarrow Fe_2(SeO_3)_3 \downarrow \tag{7}$$

In this case, the Se in the captured dust E is made insoluble by the treating agent A, and can be directly recycled as the cement material or discarded, while the Se elution standard is satisfied.

On the other hand, the combustion exhaust gas fed into the absorption column 521 contacts with the absorbent slurry sprayed from the spray pipe 526 by the circulation pump 523, and sulfurous acid and Se are absorbed and removed, and the treated combustion exhaust gas is discharged from a combustion exhaust gas lead-out unit 521b.

The sulfurous acid absorbed in the absorbent slurry sprayed from the spray pipe 526 and flowing down through a filler 527 is agitated by the air sparger 524 in the tank 522, and contacts with multiple bubbles sucked in to be oxidized, and further undergoes neutralization reaction to become gypsum. In the absorption column 521, by the reaction in the reaction formula (3), nearly whole volume of hexavalent Se (main form: selenic acid $SeO_4{}^{2-}$) is transformed into tetravalent Se (main form: selenious acid $SeO_3{}^{2-}$). Principal reactions taking place in this process (other than reaction formula (3)) are expressed in reaction formulas (8) to (10).

(Absorption column combustion exhaust gas lead-in part)

$$SO_2 + H_2O \rightarrow H^+ + HSO^{3-} \tag{8}$$

(Tank)

$$H^+ + HSO_3{}^- + 1/2O_2 \rightarrow 2H + SO_4{}^{2-} \tag{9}$$

$$2H^+ + SO_4{}^{2-} + CaCO_3 + H_2O \rightarrow CaSO_4 \cdot 2H_2O + CO_2 \tag{10}$$

Thus, in the tank 522, gypsum ($CaSO_4 \cdot H_2O$), a slight amount of limestone ($CaCO_3$), and tetravalent Se (main form: selenious acid $SeO_3{}^{2-}$) are suspended or dissolved, and they are sucked out by the slurry pump 531, and supplied into the solid-liquid separator 532 to be separated into solid and liquid, and is taken out as gypsum C in a cake form of low water content (usually water content about 10 %). At this time, if not dissolved partly, tetravalent Se (main form: selenious acid $SeO_3{}^{2-}$) may be slightly mixed into the separated gypsum C, but the majority is sent into the separated liquid tank 533 together with the separated liquid.

The liquid in the separated liquid tank 533 is blended with, if necessary, makeup water D as mentioned above, and partly sent into the absorbent slurry tank 535 by the pump 534 to be mixed with limestone F, and is supplied again as absorbent slurry into the tank 522 to circulate, and in this case, further, part of the liquid in the separated liquid tank 533 is sent into the mixing means 513, and blended with the treating agent A, and sprayed into the combustion exhaust gas.

Accordingly, as mentioned above, the Se mainly composed of tetravalent form fed into the desulfurization apparatus 520, and other impurities (Cl, etc.) mixing into the circulation liquid in the desulfurization apparatus from the combustion exhaust gas are prevented from being accumulated excessively in the circulation liquid system in the desulfurization apparatus 520, and hence, the high desulfurization performance and gypsum quality are not impaired, which eliminates the requirement of installation of wastewater treating apparatus (composed of electric dialysis machine, etc.) for the desulfurization apparatus. That is, part of the circulation liquid in the desulfurization apparatus 520 is extracted sequentially as stated above, and blended with the treating agent, then sprayed into the combustion exhaust gas, and therefore the tetravalent Se in the circulation liquid is sequentially made insoluble, and is removed by the electrostatic precipitator 505 as being contained in the dust, together with the tetravalent Se in the combustion exhaust gas newly introduced from the lead-in passage 515. At the same time, other impurities mixing in the circulation liquid are sent into the combustion exhaust gas lead-in passage 515 in the route of mixing means 513 and pump 514, and returned to the combustion exhaust gas, and hence they are partly removed by the electrostatic precipitator 505 together with the dust, or pass through the absorption column 521 to be discharged from the combustion exhaust gas lead-out unit 521b together with the treated combustion exhaust gas, so that the may not be accumulated in the circulation liquid in the desulfurization apparatus 520.

As described herein, according to the combustion exhaust gas treatment apparatus of embodiment 1, aside from the conventional combustion exhaust gas purification (removal of dust, removal of sulfurous acid), most of Se in the combustion exhaust gas can be contained in the dust in an insoluble form, so that it may be directly recycled or discarded. What is more, the hard-to-treat (make insoluble) hexavalent Se is transformed into an easy-to-discard tetravalent Se by the treating agent by the oxidation-reduction reaction control means 540 in the absorption column 521 of the desulfurization apparatus 520, and therefore, as compared with the apparatus comprising an independent reaction column for transforming hexavalent Se into tetravalent Se, for example, the Se in the combustion exhaust gas can be removed and made harmless by a simple and inexpensive apparatus.

According to this combustion exhaust gas treatment apparatus, moreover, almost all of hexavalent Se is eventually transformed into tetravalent Se in the absorption column 21 by the function of the oxidation-reduction reaction control means 540, and is finally made insoluble and discarded, and therefore the concentration of the remaining hexavalent Se (not made insoluble) is extremely slight, and the elution standard may be satisfied with an ample margin.

In this case, furthermore, since the circulation liquid discharged from the desulfurization apparatus 520 is sprayed into the combustion exhaust gas lead-in passage, without particularly requiring the wastewater treating apparatus as mentioned above, impurities including Se are prevented from being accumulated excessively in the circulation liquid in the desulfurization apparatus 520, and the water in the desulfurization can be treated in a simple constitution, and the apparatus can be further reduced in cost and size, while the desulfurization performance and gypsum quality may be maintained high.

(Embodiment 2)

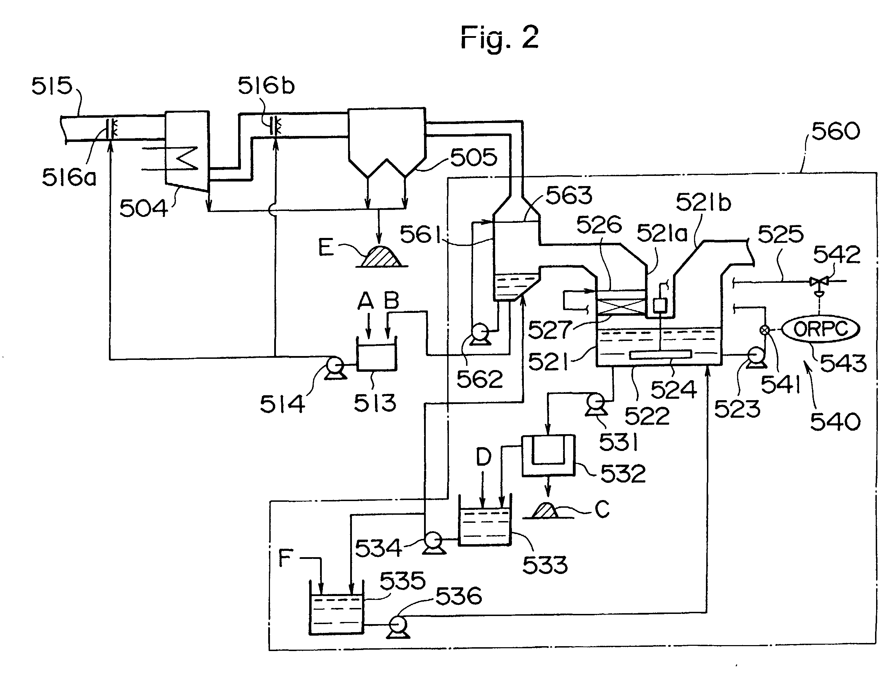

Embodiment 2 of the invention (1) is described below. Fig. 2 is a schematic structural diagram showing a constitution of a combustion exhaust gas treatment apparatus of embodiment 2. In Fig. 2, same constituent elements as in embodiment 1 are identified with same reference numerals, and their explanations are omitted.

In the combustion exhaust gas treatment apparatus of this embodiment, as shown in Fig. 2, a desulfurization apparatus 560 comprising a cooling and dust collecting column 561 for cooling the flue and collecting dust is disposed at the upstream side of an absorption column 521, and combustion exhaust gas containing Se and others is fed into the cooling and dust collecting column 561 of the desulfurization apparatus 560, and the liquid extracted from the cooling and dust collecting column 561 is fed into mixing means 513 as discharge circulation liquid B.

In the cooling and dust collecting column 561, the liquid in a separated liquid tank 533 is supplied by a pump 534, and this liquid is sprayed from an upper header pipe 563 by a circulation pump 562. Between the cooling and dust collecting column 561 and the absorption column 521, a mist eliminator, not shown, is provided.

In this constitution, impurities including Se getting into the desulfurization apparatus 560, that is, fine dust particles not captured by the electrostatic precipitator hardly mix into the absorption column 521, but are mainly absorbed in the cooling and dust collecting column 561, and are extracted as being contained in the circulation liquid B, and consequently mixed with the treating agent A and sprayed into the combustion exhaust gas lead-in passage 515 same as in embodiment 1.

Therefore, in addition to the action and effect of embodiment 1, it is further effective to maintain a high desulfurization rate and a high quality (purity) of gypsum C.

(Embodiment 3)

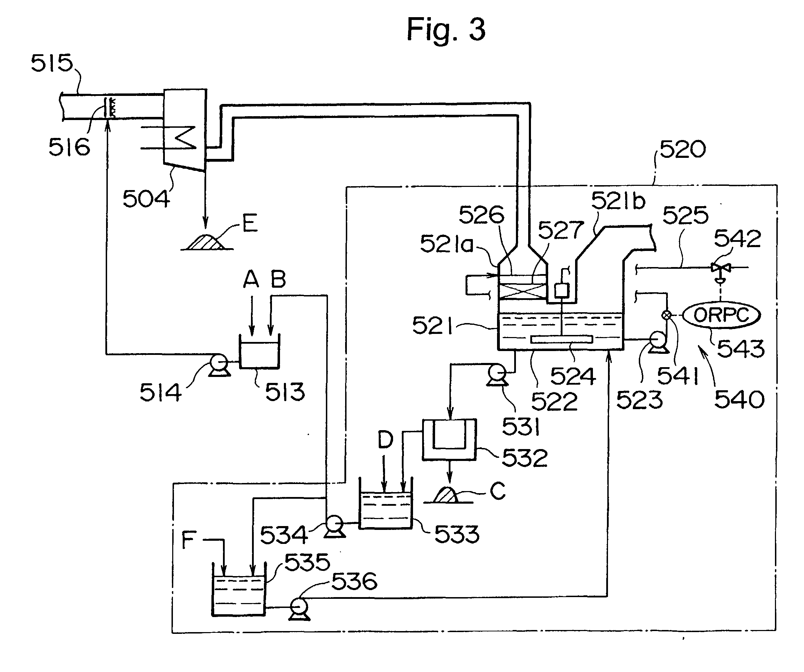

Embodiment 3 of the invention (2) is described below. Fig. 3 is a schematic structural diagram showing a constitution of a combustion exhaust gas treatment apparatus of embodiment 3. In Fig. 3, same constituent elements as in embodiment 1 are identified with same reference numerals, and their explanations are omitted.

In the combustion exhaust gas treatment apparatus of this embodiment, as shown in Fig.3, without installing electrostatic precipitator, it is characterized by feeding the combustion exhaust gas containing fly ash and dust directly into the absorption column 521 of the desulfurization apparatus 520.

In this case, most of Se in the combustion exhaust gas is contained in the dust, and enters the absorption column 521 entirely, and at least tetravalent Se thereof reacts with the sprayed treating agent A in the combustion exhaust gas lead-in passage 515 to be insoluble, and is separated in the solid-phase side by the solid-liquid separator 532, and is mixed into the gypsum C in insoluble state. If hexavalent Se is present, it is transformed into tetravalent Se in the absorption column 521 same as in embodiment 1, and is sequentially extracted as being contained in the discharge circulation liquid B, and is mixed with the treating agent A and sprayed into the combustion exhaust gas lead-in passage 515, and fed again into the desulfurization apparatus 520, and ultimately, therefore, almost all of Se is transformed into an insoluble form as tetravalent Se and is mixed in the gypsum C.

In this case, the absorption column 521 also functions as the electrostatic precipitator 505 in embodiment 1, and hence the facility cost may be lower than in the apparatus of embodiment 1.

In this embodiment, as compared with embodiment 1, the cost may be further lowered, but due to the effects of the dust (impurities) massively mixing into the absorption column, it may be difficult to realize high desulfurization rate or high quality of gypsum C, and if this is a problem, it is preferred to constitute as in embodiment 1 or 2 or embodiment 4 described below.

Incidentally, the dust E discharged from the heat recovery unit 504 is slight, and the Se contained in the dust E is made insoluble by the treating agent A, and hence it may be discarded directly.

(Embodiment 4)

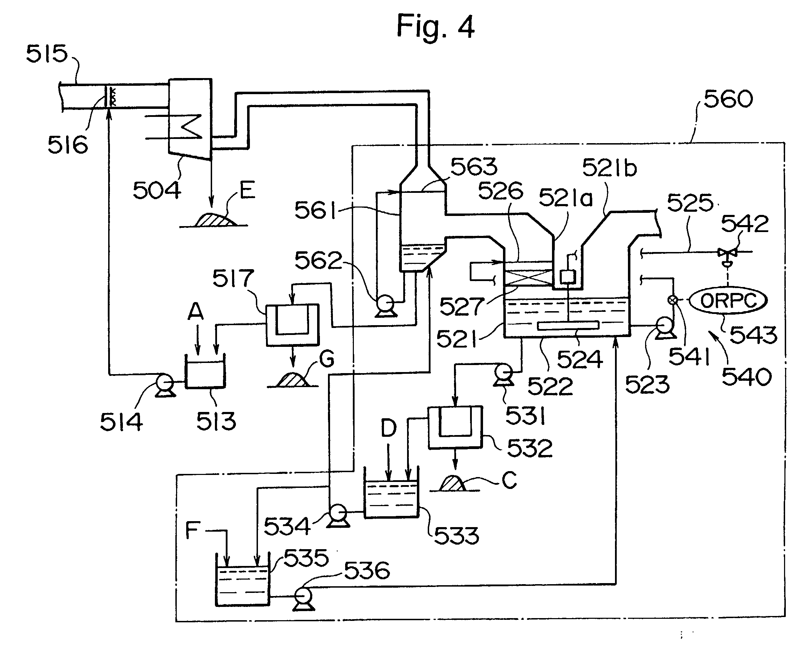

Embodiment 4 of the invention (3) is described below. Fig. 4 is a schematic structural diagram showing a constitution of a combustion exhaust gas treatment apparatus of embodiment 4. In Fig. 4, same constituent elements as in embodiment 1 are identified with same reference numerals, and their explanations are omitted.

In the combustion exhaust gas treatment apparatus of this embodiment, as shown in Fig. 4, a desulfurization apparatus 560 comprising a cooling and dust collecting column 561 for cooling the flue and collecting dust is disposed at the upstream side of an absorption column 521, and the combustion exhaust gas not deprived of dust is directly fed into the cooling and dust collecting column 561 of the desulfurization apparatus 560, and the dust slurry extracted from the cooling and dust collecting column 561 is separated into solid and liquid in the separating means 517, and the separated liquid discharged from the separating means 517 is led into the mixing means 513. The separating means 517 is, for example, composed of a centrifugal settling machine, and it discharges the dust slurry led into the dust in the cooling and dust collecting column 561 as cake of low water content (dust cake G).

In this case, most of Se in combustion exhaust gas is fed into the cooling and dust collecting column 561 as being contained in the dust, and at least tetravalent Se thereof reacts with the sprayed treating agent A in the combustion exhaust gas lead-in passage 515 to be insoluble, and it is separated in the solid phase side in the separating means 517, and is mixed in the dust cake G in insoluble state. If hexavalent Se is present, it is transformed into tetravalent Se in the cooling and dust collecting column 561 same as in embodiment 2, and is sequentially extracted as being contained in the discharge slurry, and is blended with the treating agent A and sprayed into the combustion exhaust gas lead-in passage 515, and is led into the desulfurization apparatus 520 again, and finally almost all Se is made insoluble as tetravalent Se, and is mixed in the dust cake G. Therefore, in this case, too, if the dust cake G is directly discarded, the Se elution standard is satisfied.

Moreover, the cooling and dust collecting column 561 also function as the electrostatic precipitator 505 in embodiment 2, and it is effective to reduce the cost of equipment as compared with the apparatus of embodiment 2. Still more, in this embodiment, different from embodiment 3, much dust does not mix into the absorption column 521, and hence the equipment cost may be further decreased, while high desulfurization rate and high quality of gypsum C may be realized.

The invention is not limited to the illustrated embodiments alone, but various modifications are possible. For example, if hexavalent Se does not exist and only other Se than hexavalent is present in the combustion exhaust gas in the desulfurization apparatus, the process or apparatus for reducing hexavalent Se into tetravalent Se is not needed.

The constitution of the desulfurization apparatus is not limited to the tank oxidation type shown in the embodiments, and, for example, an oxidation column in which the slurry extracted from the absorption column is fed may be separately installed, and by blowing air into this oxidation column, final oxidation-reduction reaction may be performed herein. In this case, too, hexavalent Se is transformed into tetravalent Se in the absorption column or oxidation column.

As the treating agent for making tetravalent Se insoluble, for example, aside from $FeCl_3$, $Fe_2(SO_4)_3$, chelating agent (e.g. Epolus MX-7 of Miyoshi Resin), or high molecular heavy metal capturing agent (e.g. Epofloc L-1 of Miyoshi Resin) may be used.

EFFECTS OF THE INVENTION

According to the combustion exhaust gas treatment apparatus of the invention (1), at least the tetravalent Se in the combustion exhaust gas reacts with the treating agent sprayed into the combustion exhaust gas lead-in passage by the spraying means and becomes insoluble before it is removed by the dust collector. Accordingly, at least the content of other Se than tetravalent Se is less, if the dust after treatment is directly recycled or discarded, the Se elution standard is satisfied.

Incidentally, if Se or other impurities may be mixed slightly into the circulation liquid in the desulfurization apparatus without being removed by the dust collector, most of Se becomes tetravalent, and is contained in the circulation liquid together with other impurities by the function of the mixing means and spraying means, and extracted, blended with treating agent, and sprayed into the combustion exhaust gas lead-in passage. Accordingly, Se and impurities mixing into the circulation liquid of the desulfurization apparatus mix into the dust to be removed by the dust collector, and are sequentially discharged, thereby preventing excessive accumulation of these impurities into the circulation liquid in the desulfurization apparatus. Therefore, not requiring to install wastewater treating apparatus for the desulfurization apparatus, the apparatus may be reduced in cost and size, while the desulfurization performance in the desulfurization apparatus and byproduct purity may be maintained high.

According to the combustion exhaust gas treatment apparatus of the invention (2), although most Se in the combustion exhaust gas is absorbed in the desulfurization apparatus, at least tetravalent Se thereof reacts with the treating agent sprayed into the flue lead-in passage to be insoluble, and is discharged as being mixed in the solid matter (gypsum, etc.) separated and formed from the slurry in the desulfurization apparatus. The hexavalent Se is transformed into tetravalent Se by reduction reaction in the desulfurization apparatus, and is contained in the circulation liquid in the desulfurization apparatus, and is sequentially extracted together with other impurities, and is sprayed into the combustion exhaust gas lead-in passage together with the treating agent, so that it is finally discharged as being mixed in the solid matter (gypsum, etc.) separated and formed in the desulfurization apparatus, and thereby Se and other impurities are not accumulated in the circulation liquid.

Therefore, by this apparatus, too, the Se elution standard may be satisfied easily, and moreover the desulfurization performance of the desulfurization apparatus and byproduct purity can be maintained high without using wastewater treating apparatus.

According to the combustion exhaust gas treatment apparatus of the invention (3), although most Se in the combustion exhaust gas is absorbed in the cooling and dust collecting column of the desulfurization apparatus, at least tetravalent Se thereof reacts with the treating agent sprayed by the spraying means into the flue lead-in passage to be insoluble, and is discharged as being mixed in the solid matter (dust cake) separated and formed by the separating means for separating the dust slurry in the cooling and dust collecting column into solid and liquid. The hexavalent Se is mostly transformed into tetravalent Se by reduction reaction with the sulfurous acid absorbed in the liquid in the cooling and dust collecting column, and is contained in the filtrate in the separating means, and is sequentially extracted together with other impurities, and is sprayed into the combustion exhaust gas lead-in passage together with the treating agent, so that it is finally discharged as being mixed in the solid matter separated and formed by the separating means, and thereby Se and other impurities are not accumulated in the circulation liquid.

Therefore, by this apparatus, too, the Se elution standard may be satisfied easily, and moreover the desulfurization performance of the desulfurization apparatus and byproduct purity can be maintained high without using wastewater treating apparatus. Moreover, in this apparatus, since almost no impurity such as dust mixes into the slurry in the absorption column in the desulfurization apparatus, the desulfurization rate in the desulfurization apparatus, gypsum purity and other performances may be maintained high.

According to the combustion exhaust gas treatment apparatus of the invention (4), if hexavalent Se is present, this hexavalent Se may be almost completely transformed into tetravalent Se in the desulfurization apparatus, and hence the Se in the combustion exhaust gas may be treated more easily and perfectly.

**Claims**

1. Combustion exhaust gas treatment apparatus for treating combustion exhaust gas containing sulfurous acid, dust and Se components, comprising
   a desulfurization apparatus (520, 560) having an absorption column (521) in which an absorbent slurry circulates, for absorbing and removing sulfurous acid in the combustion exhaust gas,
   a solid-liquid separator (532) for the absorbent slurry extracted from the desulfurization apparatus (520, 560),
   means for mixing (513) a treating agent (A) into a circulation liquid (B) composing the absorbent slurry extracted from the desulfurization apparatus (520, 560), for making at least tetravalent Se insoluble, and
   means for spraying (514, 516, 516a, 516b) the circulation liquid (B) mixed with the treating agent (A) into the combustion exhaust gas upstream of the desulfurization apparatus (520, 560).

2. Combustion exhaust gas treatment apparatus of claim 1, further comprising a dust collector (505) for removing dust in the combustion exhaust gas disposed upstream of the desulfurization apparatus (520, 560), the circulation liquid (B) mixed with the treating agent (A) being sprayed into the combustion exhaust gas upstream of the dust collector (505).

3. Combustion exhaust gas treatment apparatus of claim 1, further comprising
   a cooling and dust collecting column (561) disposed upstream of the absorption column (521),

means for separating (517) the circulation slurry extracted from the cooling and dust collecting column (561) into solid and liquid,

the treating agent (A) being mixed into the separated liquid discharged from the separating means (517),

the separated liquid mixed with the treating agent (A) being sprayed into the combustion exhaust gas upstream of the desulfurization apparatus (560),

wherein the combustion exhaust gas is directly fed into the cooling and dust collecting column (561) of the desulfurization apparatus (560).

**4.** Combustion exhaust gas treatment apparatus of any one of claims 1 to 3, further comprising

oxidation-reduction reaction control means (540) for controlling the oxidation-reduction reaction in the desulfurization apparatus (520, 560) so that the hexavalent Se in the slurry in the desulfurization apparatus may be reduced to tetravalent Se by the sulfurous acid in the slurry.

**Patentansprüche**

**1.** Abgasbehandlungsvorrichtung zur Behandlung eines Verbrennungsabgases, das schweflige Säure, Staub und Selenbestandteile enthält, umfassend

eine Entschwefelungseinrichtung (520, 560) mit einer Absorptionssäule (521), in der eine Absorptionsaufschlämmung zur Absorption und Abscheidung von schwefeliger Säure im Verbrennungsabgas zirkuliert,

eine Fest - Flüssig - Trenneinrichtung (532) für aus der Entschwefelungseinrichtung (520, 560) abgezogene Absorptionsaufschlämmung,

eine Einrichtung zum Einmischen (513) eines Behandlungsmittels (A) in eine Zirkulations - Flüssigkeit (B) zur Bildung der aus der Entschwefelungseinrichtung (520, 560) abgezogenen Absorptionsaufschlämmung, um wenigstens tetravalentes Selen unlöslich zu machen, und

eine Einrichtung zum Einsprühen (514, 516, 516a, 516b) der zirkulierenden Flüssigkeit (B) mit dem Behandlungsmittel (A) in das Verbrennungsabgas in Strömungsrichtung oberhalb der Entschwefelungseinrichtung (520, 560).

**2.** Abgasbehandlungsvorrichtung zur Behandlung eines Verbrennungsabgases nach Anspruch 1, ferner umfassend

einen Staubabscheider (505) zur Abscheidung von Staub aus dem Verbrennungsabgas, der in Strömungsrichtung oberhalb der Entschwefelungseinrichtung (520, 560) angeordnet ist,

wobei die zirkulations - Flüssigkeit mit dem Behandlungsmittel (A) in Strömungsrichtung oberhalb des Staubabscheiders (505) in das Verbrennungsabgas eingesprüht wird.

**3.** Abgasbehandlungsvorrichtung zur Behandlung eines Verbrennungsabgases nach Anspruch 1, ferner umfassend

eine in Strömungsrichtung oberhalb der Absorptionssäule (521) angeordnete Kühl- und Staubabscheidesäule (561),

eine Trenneinrichtung (517) zum Trennen der aus der Kühl- und Staubabscheidesäule (561) abgezogenen zirkulations - Flüssigkeit in Feststoff und Flüssigkeit,

wobei das Behandlungsmittel (A) in die aus der Trenneinrichtung (517) abgezogene abgetrennte Flüssigkeit eingemischt wird,

die mit dem Behandlungsmittel (A) vermischte abgetrennte Flüssigkeit in Strömungsrichtung oberhalb der Entschwefelungseinrichtung (560) in das Verbrennungsabgas eingesprüht wird, und

das Verbrennungsabgas unmittelbar in die Kühl- und Staubabscheidesäule (561) der Entschwefelungseinrichtung (560) eingespeist wird.

**4.** Abgasbehandlungsvorrichtung zur Behandlung eines Verbrennungsabgases nach einem der Ansprüche 1 bis 3, ferner umfassend eine Einrichtung (540) zur Regelung der Oxidations - Reduktions - Reaktion für die Regelung der Oxidations - Reduktions - Reaktion in der Entschwefelungseinrichtung (520, 560), so dass hexavalentes Selen in der Aufschlämmung der Entschwefelungseinrichtung von der schwef ligen Säure in der Aufschlämmung zu tetravalentem Selen reduziert werden kann.

**Revendications**

**1.** Dispositif de traitement de gaz de la combustion pour traiter des gaz de la combustion contenant de l'acide sulfureux, de la poussière et des composants à base de Se, comprenant

un appareil de désulfuration (520, 560) avec une colonne d'absorption (521) dans laquelle circule une suspension absorbante pour absorber et séparer l'acide sulfureux dans le gaz de la combustion,

un séparateur solide - liquide (532) pour la suspension absorbante soutirée de l'appareil de désulfuration (520, 560),

un moyen de mélange (513) pour ajouter un agent de traitement (A) au liquide circulant (B) composant la suspension absorbante soutirée de l'appareil de désulfuration (520, 560) pour rendre au moinsle Se tetravalent insoluble, et

un moyen pour asperger (514, 516, 516a, 516b) le liquide circulant (B) mêlé avec l'agent de traitement (A) dans le gaz de la combustion disposée en amont de l'appareil de désulfuration (520, 560).

2. Dispositif de traitement de gaz de la combustion selon la revendication 1, comprenant de plus
un collecteur de poussière (505) pour séparer la poussière du gaz de la combustion, disposé en amont du collecteur de la poussière (505).

3. Dispositif de traitement de gaz de la combustion selon la revendication 1, comprenant de plus
une colonne à refroidir et à collecter la poussière (561) disposée devant/en amont la colonne d'absorption (521),
un moyen pour séparer (517) la suspension circulante soutirée de la colonne à refroidir et à collecter la poussière (561) en matériaux solides et en liquide,
le liquide séparé et mêlé avec l'agent de traitement (A) est aspergé dans le gaz de la combustion en amont de l'appareil de désulfuration (560),
le gaz de la combustion est introduit directement dans la colonne à refroidir et à collecter la poussière (561) de l'appareil de désulfuration (560).

4. Dispositif de traitement de gaz de la combustion selon l'une quelconque des revendications 1 à 3, comprenant de plus
un dispositif de réglage de la réaction de l'oxydation - réduction (540) pour régler la réaction de l'oxydation - réduction dans l'appareil de désulfuration (520, 560) de telle façon que le Se hexavalent dans la suspension de l'appareil de désulfuration peut être réduit au Se tetravalent par l'acide sulfureux dans la suspension.

Fig. 1

Fig. 2

Fig. 3

# Fig. 4

EP 1 142 625 B1

# Fig. 5

BOILER 1 2 DENITRATION

ELECTROSTATIC PRECIPITATOR

DESULFURIZATION

A/H 3

HEAT RECOVERY

REHEATING

10

EP 5

4

7

8

COAL

(≈0)

GYPSUM

ASH TREATMENT

WASTEWATER

ASH DISPOSAL YARD

RECYCLING (CEMENT MATERIAL, ETC.)

EP 1 142 625 B1

## Fig. 6

EP 1 142 625 B1

EP 1 142 625 B1

# Fig. 7